# EUROPÄISCHE PATENTSCHRIFT

(11) **EP 1 073 930 B1**
(45) Veröffentlichungstag und Bekanntmachung des Hinweises auf die Patenterteilung: **02.10.2002**
(21) Anmeldenummer: 99919262.8
(22) Anmeldetag: 22.04.1999
(51) Int. Cl.: G02F 1/03

(54) **TRANSVERSALER ELEKTROOPTISCHER MODULATOR**
TRANSVERSE ELECTRO-OPTIC MODULATOR
MODULATEUR ELECTRO-OPTIQUE TRANSVERSAL

(30) Priorität: 23.04.1998 DE 19818275; 06.05.1998 DE 19820202
(43) Veröffentlichungstag der Anmeldung: 07.02.2001
(73) Patentinhaber: Linos Photonics GmbH, 82152 Planegg (DE)
(72) Erfinder: DIEDRICH, Frank, D-76229 Karlsruhe (DE); REISSMANN, Frank, D-07973 Greiz (DE)
(74) Vertreter: Säger, Manfred
(86) Internationale Anmeldenummer: EP9902725
(87) Internationale Veröffentlichungsnummer: WO99056168

(56) Entgegenhaltungen:
- US-A- 1 792 752
- US-A- 2 705 903
- BIAZZO M R: "Fabrication of a lithium tantalate temperature-stabilized optical modulator" APPLIED OPTICS, MAY 1971, USA, Bd. 10, Nr. 5, Seiten 1016-1021, XP002111160 ISSN: 0003-6935

## Beschreibung

Die Erfindung betrifft einen transversalen elektrooptische Modulator (EOM) zur Modulation der Lichtwelle eines Laserstrahls mit einer bestimmten Länge Lambda gemäß dem Oberbegriff des Anspruchs 1.

Laserstrahlungsquellen für die Fernsehbildproduktion einzusetzen, ist ansich bekannt (DE-PS 43 06 797).

Es ist ferner für die Belichtung von fotoempfindlichen Material wie Diafilm oder Reprofilm bekannt, Modulatoren mit einer Doppelbrechungs-Kompensation einzusetzen. Allerdings ist ein solcher Modulator für sichtbares Licht, insbesondere grün und blau weder klein noch billig so herstellbar, daß er eine Modulationsbreite von 100 MHz besitzt und die Verwendung von spektral- nicht notwendigerweise schmalbandingen, also kostengünstigen Laserlichtquellen gestattet.

Modulatoren mit Doppelbrechungskompensation sind aus US 2 705 903 und Biazzo, "Fabrication of a Lithium Tantalate Temperature - Stabilized Optical Modulator", Applied Optics, vol. 10, No. 5, pages 1016 - 1021, 1971, bekannt. Die Merkmale des Oberbegriffs von Anspruch 1 sind einenfalls aus diesen Dokumenten bekannt.

Der Erfindung liegt deshalb die Aufgabe zugrunde, einen transversalen elektrooptischen Modulator (EOM) für sichtbares Licht, insbesondere grün und blau in kleiner Baugröße und billig herstellbar bereitzustellen, der eine Modulationsbandbreite von 100 MHz besitzt und die Verwendung von spektralnicht notwendigweise schmalbandigen Laserlichtquellen gestattet.

Diese Aufgabe wird bei einem transversalen EOM gemäß dem Oberbegriff des Anspruchs 1 erfindungsgemäß durch dessen kennzeichnende Merkmale gelöst.

Die erfindungsgemäße Idee liegt also darin, eine Kompensation der optischen Doppelbrechung des Modulatorelements durch ein in der Höhe wesentlichen größeres, aber gleichlanges Kompensatorelement aus einem Einkristall aus demselben Material zu erzielen, wobei dessen Breite und Höhe so groß gewählt werden, daß in ihm keine nennenswerten (bezüglich des Modulators) zusätzlichen geometrisch bedingten optischen Verluste mehr auftreten, nachdem in dem Modulatorelement durch bewußte Vernachlässigung eines Teils der Dicke des Laserstrahls die optische Effizienz bestenfalls noch ca. 15 % beträgt. Dies reicht aber für die Anwendung zur Belichtung von fotoempfindlichem Material völlig aus, wenn nur eine hohe Modulationsbreite bei zugleich niedrigen Kosten erzielbar ist, wie es die Erfindung zuläßt. Dies ist deshalb, weil Strahlungsquellen für Laserstrahlen mit bis zu 100 mW Leistung relativ kostengünstig verfügbar sind, die Anwendung aber nur höchstens etwa ein Zehntel der genannten Leistung benötigt. Es ist nur sicherzustellen, daß in dem oder nahe beim Modulatorelement eine Strahlungstaille des Laserstrahls zu liegen kommt. Vorzugsweise liegt sie auf der Eintrittsfläche des Modulatorelements. Wegen der geringen Dicke des Modulatorelementes ergibt sich eine geringe Ansteuerspannung von unter 50 V, so daß man einfach herzustellende, oder im Handel erhältliche elektrische Verstärker mit einer Ausgangsspannung unter 50V, beispielsweise "Video-Output- Amplifier-Chips" (nachfolgend kurz Video-Chips genannt) einsetzen kann, von denen ein einziger Chip das Modulatorelement ansteuert.

Kompensationsanordnungen sind z.B. dergestalt angeordnet, daß die optische Weglänge von durch die Gesamtanordnung gestrahltem Licht unabhängig ist von dessen Polarisationszustand.

Weitere zweckmäßige Ausgestaltungen und Weiterbildungen der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:

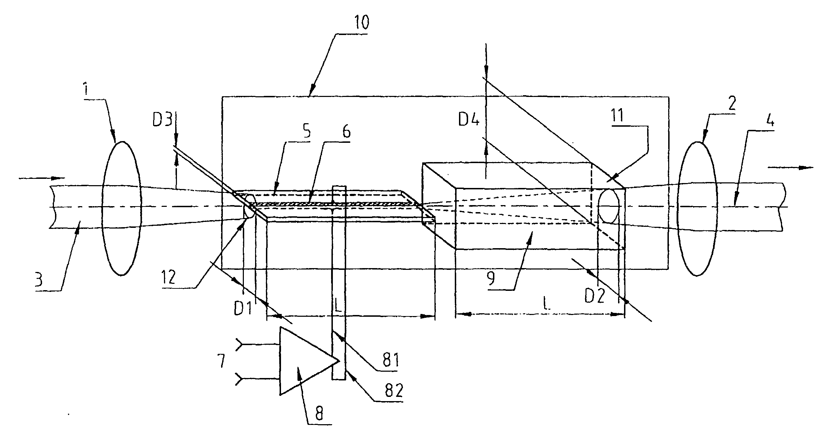

- Figur 1: den transversalen elektrooptischen Modulator, in schematischer perspektivischer Darstellung mit Ansteuerschaltkreisen.

Die Lichtwelle eines Laserstrahls 3 mit einer bestimmten Wellenlänge wird auf eine als optische Fokussierlinse 1 ausgebildete, optische Einrichtung gerichtet. In Strahlungsrichtung hinter dem transversalen optischen Modulator EOM 10 ist eine mit 2 bezeichnete, als Kollimierlinse ausgebildete optische Einrichtung angeordnet, aus der der mit 4 bezeichnete Laserstrahl austritt.

Der EOM 10 weist zwei hintereinander angeordneten Elemente, nämlich zunächst in Strahlungsrichtung ein Modulatorelement 5 und dahinter ein Kompensationselement 9 auf, dessen beide Einkristalle aus demselben Material bestehen. Es ist lediglich die senkrecht zur Strahlungsrichtung 3, 4 verlaufende optische Achse des Modulatorelements 5 bezüglich jener des Kompensatorelemtents 9 in der senkrecht zur Strahlungsrichtung 3, 4 verlaufenden Ebene um einen rechten Winkel, also 90° bezüglich des Laserstrahls gedreht. Die Längen L beider Kristalle in Strahlungsrichtung 3, 4 sind gleich.

Das Kompensationselement 9 weist einen - quadratischen - Querschnitt mit der Seitenlänge D₄ dergestalt auf, daß diese größer als der Durchmesser D2 des aus der Austrittsfläche 11 des Modulatorelements 9 austretenden Laserstrahls ist, so daß hier keine wesentlichen weiteren Verluste mehr entstehen.

Das Modulatorelement 5 weist eine Dicke D3 auf, die kleiner als der Durchmesser D1 des Laserstrahls in der Ebene der Eintrittsfläche 12 des Modulatorelements ist.

Sowohl in Strahlungsrichtung 3, 4 vor dem Modulatorelement 5 als auch hinter diesem und vor dem Kompensationselement 9 können je eine Blende zur Vorgabe des Durchmessers D1 des Laserstrahls 3 bzw. zur Abschattung des nicht durch das Modulatorelement 5, sondern an diesem vorbei gehenden Laserstrahl angeordnet sein.

Ferner ist ein elektrischer Verstärker 8 mit zwei Eingängen 7 vorgesehen, dessen Ausgangsleitungen 81, 82 an die Elektroden 6 des Modulatorelementes 5 angeschlossen sind, wie dies schematisch in Fig. 1 dargestellt ist.

Die Dicke D3 des Modulatorelements 5 soll kleiner als die mit dem Faktor 2 multiplizierte Quadratwurzel aus dem durch Pi geteilten Produkt aus der mittleren Wellenlänge Lambda und der Länge des Modulatorelements 5 oder des Kompensatorelements 9 sein. Die Höhe oder Breite D4 des im Querschnitt quadratisch angenommenen Kompensatorelements 9 soll größer als das Zweieinhalbfache der Dicke D3 des Modulatorelements 5 sein.

## Patentansprüche

1. Transversaler elektrooptischer Modulator (EOM) zur Modulation der Lichtwelle eines Laserstrahls (3) mit einer mittleren Wellenlänge Lambda, mit zumindest einem durch einen elektrischen Verstärker (8) ansteuerbaren Modulatorelement (5) vorgegebener Länge (L) aus einem bestimmten Werkstoff eines doppelt brechenden Einkristalls und mit zumindest einem Kompensatorelement (9) gleicher Länge (L) aus demselben Werkstoff eines Einkristalls
wobei das Kompensatorelement (9) zur Kompensation der optischen Doppelbrechung des zumindest einen Modulatorelements (5) angeordnet ist,
**dadurch gekennzeichnet, daß**
bei beliebiger Breite und vorgegebener Länge (L) die Dicke (D3) des zumindest einen Modulatorelements (5) sowohl kleiner als die Höhe als auch die Breite (D4) des Kompensatorelements (9) ist.

2. EOM nach Anspruch . 1, **dadurch gekennzeichnet, daß** die Dicke (D3) des zumindest einen Modulatorelements (5) um einen Faktor größer als 15, vorzugsweise größer als 40 kleiner als die Höhe oder die Breite (D4) des Kompensatorelements (9) ist.

3. EOM nach Anspruch 1 oder 2, **dadurch gekennzeichnet, daß** die Breite des zumindest einen Modulatorelements (5) der Höhe oder der Breite (D4) des Kompensatorelements (9) entspricht.

4. EOM nach einem der Ansprüche 1 bis 3, **dadurch gekennzeichnet, daß** das Kompensatorelement (9) einen quadratischen Querschnitt mit einer der Höhe entsprechenden Breite (D4) aufweist.

5. EOM nach einem der Ansprüche 1 bis 4, **dadurch gekennzeichnet, daß** die Höhe (D4) des Kompensatorelements (9) 2 bis 4 mm, vorzugsweise 3 mm beträgt.

6. EOM nach einem der Ansprüche 1 bis 4, **dadurch gekennzeichnet, daß** die Dicke (D3) des Modulatorelements 0,2 bis 0,02, vorzugsweise 0,07 mm beträgt.

7. EOM nach einem der Ansprüche 1 bis 6, **dadurch gekennzeichnet, daß** die Dicke (D3) des Modulatorelements (5) kleiner als der Durchmesser des Laserstrahls (3) in der Ebene der Eintrittsfläche (12) des Modulatorelements (5) ist, wobei als Durchmesser eines Laserstrahls den kleinsten Durchmesser definiert, der mindestens 99 % der Strahlungsleistung einschließt.

8. EOM nach einem der Ansprüche 1 bis 7, **gekennzeichnet durch** eine in Strahlungsrichtung (3, 4) des Laserstrahls vor und hinter dem Modulator (10) angeordnete optische Einrichtung.

9. EOM nach Anspruch 8, **dadurch gekennzeichnet, daß** die vor dem Modulator (10) angeordnete optische Einrichtung als Fokussierlinse (1) ausgebildet ist.

10. EOM nach Anspruch 8, **dadurch gekennzeichnet, daß** die nach dem Modulator (10) angeordnete optische Einrichtung als Kollimierlinse (2) ausgebildet ist.

11. EOM nach einem der Ansprüche 1 bis 10, **dadurch gekennzeichnet, daß** in Strahlungsrichtung (3, 4) vor und hinter dem Modulator (10) eine Polarisatoreinrichtung angeordnet ist.

12. EOM nach einem der Ansprüche 1 bis 11, **dadurch gekennzeichnet, daß** vor und hinter dem Modulatorelement (5) eine Blendeneinrichtung zur Formung des Querschnitts des Laserstrahls angeordnet ist.

13. EOM nach einem der Ansprüche 1 bis 12, **dadurch gekennzeichnet, daß** das Modulatorelement (11) Einkristalle eines der folgenden Werkstoffe aufweist: ADP, AD*P, KDP, KD*P, KTP, KTA, RTA, Lithiumniobat, Lithiumtantalat, BBO, Kaliumniobat.

14. EOM nach einem der Ansprüche 1 bis 4 oder 7 bis 13, **dadurch gekennzeichnet, daß** die Ausdehnung in Richtung des elektrischen Feldes des Steuersignals, also der Dicke des Modulatorelements (11) im Bereich von 0,025 bis 0,25 mm und die elektrische Kapazität zwischen 5 und 20 pF und/oder die Länge des EOM zwischen 5 und 30 mm liegt.

15. EOM nach einem der Ansprüche 1 bis 14, **dadurch gekennzeichnet, daß** das Modulatorelement (11) den auf einem Substrat angeordneten Einkristall aufweist, der bei vorgegebener Länge und Dicke breiter als die Breite des in etwa quadratischen Querschnitts des elektrooptisch wirksamen Modulationsquerschnittes ist.

16. Verwendung von EOMs nach einem der Ansprüche 1 bis 15 in verbindung mit an sich bekannten Video-Output-Amplifier-Chips für TV-Geräte als elektrischer Verstärker zur Ansteuerung des Modulatorelements (5).

## Claims

1. A transverse electro-optical modulator (EOM) for modulation of the light wave of a laser beam (3) with a mean wavelength lambda, comprising at least one modulator element (5) of predetermined length (L) which is actuable by an electrical amplifier (8) and comprises a given material of a birefringent single crystal and at least one compensator element (9) of equal length (L) of the same material of a single crystal, wherein the compensator element (9) is arranged to compensate for the optical birefringence of the at least one modulator element (5), **characterised in that**, with any width and a predetermined length (L) the thickness (D3) of the at least one modulator element (5) is smaller than both the height and also the width (D4) of the compensator element (9).

2. An EOM according to claim 1 **characterised in that** the thickness (D3) of the at least one modulator element (5) is smaller by a factor greater than 15 and preferably greater than 40 than the height or the width (D4) of the compensator element (9).

3. An EOM according to claim 1 or claim 2 **characterised in that** the width of the at least one modulator element (5) corresponds to the height or the width (D4) of the compensator element (9).

4. An EOM according to one of claims 1 to 3 **characterised in that** the compensator element (9) is of a square cross-section of a width (D4) corresponding to the height.

5. An EOM according to one of claims 1 to 4 **characterised in that** the height (D4) of the compensator element (9) is 2 to 4 mm, preferably 3 mm.

6. An EOM according to one of claims 1 to 4 **characterised in that** the thickness (D3) of the modulator element is 0.2 to 0.02 and preferably 0.07 mm.

7. An EOM according to one of claims 1 to 6 **characterised in that** the thickness (D3) of the modulator element (5) is smaller than the diameter of the laser beam (3) in the plane of the acceptance surface (12) of the modulator element (5), wherein defined as the diameter of a laser beam is the smallest diameter which includes at least 99% of the radiation power.

8. An EOM according to one of claims 1 to 7 **characterised by** an optical device arranged in front of and behind the modulator (10) in the radiation direction (3, 4) of the laser beam.

9. An EOM according to claim 8 **characterised in that** the optical device arranged in front of the modulator (10) is in the form of a focusing lens (1).

10. An EOM according to claim 8 **characterised in that** the optical device arranged behind the modulator (10) is in the form of a collimating lens (2).

11. An EOM according to one of claims 1 to 10 **characterised in that** a polarising device is arranged in front of and behind the modulator (10) in the radiation direction (3, 4).

12. An EOM according to one of claims 1 to 11 **characterised in that** an aperture device for shaping the cross-section of the laser beam is arranged in front of and behind the modulator element (5).

13. An EOM according to one of claims 1 to 12 **characterised in that** the modulator element (11) has single crystals of one of the following materials: ADP, AD*P, KDP, KD*P, KTP, KTA, RTA, lithium niobate, lithium tantalate, BBO and potassium niobate.

14. An EOM according to one of claims 1 to 4 or 7 to 13 **characterised in that** the extent in the direction of the electrical field of the control signal, that is to say the thickness of the modulator element (11), is in the range of 0.025 to 0.25 mm and the electrical capacitance is between 5 and 20 pF and/or the length of the EOM is between 5 and 30 mm.

15. An EOM according to one of claims 1 to 14 **characterised in that** the modulator element (11) has the single crystal which is arranged on a substrate and which with a predetermined length and thickness is wider than the width of the substantially square cross-section of the electro-optically effective modulation cross-section.

16. Use of EOMs according to one of claims 1 to 15 in conjunction with per se known video output amplifier chips for TV units as an electrical amplifier for actuation of the modulator element (5).

## Revendications

1. Modulateur électro-optique transversal (EOM) pour moduler l'onde lumineuse d'un rayon laser (3) d'une longueur d'onde moyenne lambda, avec au moins un élément modulateur (5) d'une longueur prédéterminée (L) pouvant être commandé par un amplificateur électrique (8), réalisé dans une matière définie d'un monocristal diffractant en double et avec au moins un élément compensateur (9) de même longueur (L) réalisé dans la même matière d'un monocristal, l'élément compensateur (9) étant agencé pour compenser la double diffraction optique de l'élément modulateur (5) au moins unique, **caractérisé en ce que**, pour une largeur quelconque et une longueur prédéterminée (L), l'épaisseur (D3) de l'élément modulateur au moins unique (5) est plus petite que la hauteur et que la largeur (D4) de l'élément compensateur (9).

2. Modulateur électro-optique selon la revendication 1, **caractérisé en ce que** l'épaisseur (D3) de l'élément modulateur (5) au moins unique est plus petite que la hauteur ou la largeur (D4) de l'élément compensateur (9) d'un facteur supérieur à 15, de préférence supérieur à 40.

3. EOM selon la revendication 1 ou 2, **caractérisé en ce que** la largeur de l'élément modulateur (5) au moins unique correspond à la hauteur ou à la largeur (D4) de l'élément compensateur (9).

4. Modulateur électro-optique selon l'une des revendications 1 à 3, **caractérisé en ce que** l'élément compensateur (9) présente une section carrée avec une largeur (D4) correspondant à la hauteur.

5. Modulateur électro-optique selon l'une des revendications 1 à 4, **caractérisé en ce que** la hauteur (D4) de l'élément compensateur (9) est de 2 à 4 mm, de préférence 3 mm.

6. Modulateur électro-optique selon l'une des revendications 1 à 4, **caractérisé en ce que** l'épaisseur (D3) de l'élément modulateur est de 0,2 à 0,02 mm, de préférence de 0,07 mm.

7. Modulateur électro-optique selon l'une des revendications 1 à 6, **caractérisé en ce que** l'épaisseur (D3) de l'élément modulateur (5) est inférieure au diamètre du rayon laser (3) dans le plan de la surface d'entrée (12) de l'élément modulateur (5), le diamètre d'un rayon laser étant défini comme le plus petit diamètre qui contient au moins 99% de la puissance du rayonnement.

8. Modulateur électro-optique selon l'une des revendications 1 à 7, **caractérisé par** un dispositif optique disposé dans la direction du rayonnement (3, 4) du rayon laser, avant et après le modulateur (10).

9. Modulateur électro-optique selon la revendication 8, **caractérisé en ce que** le dispositif optique disposé avant le modulateur (10) a la forme d'une lentille de focalisation (1).

10. Modulateur électro-optique selon la revendication 8, **caractérisé en ce que** le dispositif optique disposé après le modulateur (10) a la forme d'une lentille de collimation (2).

11. Modulateur électro-optique selon l'une des revendications 1 à 10, **caractérisé en ce qu'**un dispositif de polarisation est disposé avant et après le modulateur (10) dans la direction du rayonnement (3, 4).

12. Modulateur élecro-optique selon l'une des revendications 1 à 11, **caractérisé en ce qu'**un dispositif à diaphragme est disposé avant et après l'élément modulateur (5) pour former la section du rayon laser.

13. Modulateur électro-optique selon l'une des revendications 1 à 12, **caractérisé en ce que** l'élément modulateur (11) présente des monocristaux d'une des matières suivantes: ADP, AD*P, KDP, KD*P, KTP, KTA, RTA, niobate de lithium, tantalate de lithium, BBO, niobate de potassium.

14. Modulateur électro-optique selon l'une des revendications 1 à 4 ou 7 à 13, **caractérisé en ce que** l'extension dans la direction du champ électrique du signal de commande, donc de l'épaisseur de l'élément modulateur (11) se situe dans la plage de 0,025 à 0,25 mm et la capacité électrique entre 5 et 20 pF et/ou la longueur de l'EOM entre 5 et 30 mm.

15. Modulateur électro-optique selon l'une des revendications 1 à 14, **caractérisé en ce que** l'élément modulateur (11) présente le monocristal disposé sur un substrat, qui pour une longueur et une épaisseur prédéterminées est plus large que la largeur de la section à peu près carrée de la section de modulation électro-optique active.

16. Utilisation de modulateurs électro-optiques selon l'une des revendications 1 à 15 en association avec des vidéo output amplifier chips (1) connus en soi pour téléviseurs en tant qu'amplificateurs électriques pour commander l'élément modulateur (5).
